(19) Europäisches Patentamt
European Patent Office
Office européen des brevets

(11) **EP 2 399 177 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(21) Anmeldenummer: **10704804.3**

(22) Anmeldetag: **12.02.2010**

(51) Int Cl.:
**G01R 31/40** (2006.01)     **G05B 23/02** (2006.01)

(86) Internationale Anmeldenummer:
**PCT/EP2010/051797**

(87) Internationale Veröffentlichungsnummer:
**WO 2010/094631 (26.08.2010 Gazette 2010/34)**

(54) **VERFAHREN UND VORRICHTUNG ZUR ÜBERWACHUNG EINER PHOTOVOLTAIKANLAGE**

METHOD AND DEVICE FOR MONITORING A PHOTOVOLTAIC UNIT

PROCÉDÉ ET DISPOSITIF DE SURVEILLANCE D'UNE INSTALLATION PHOTOVOLTAÏQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.02.2009 DE 102009009050**

(43) Veröffentlichungstag der Anmeldung:
**28.12.2011 Patentblatt 2011/52**

(73) Patentinhaber: **Siemens AG**
**80333 München (DE)**

(72) Erfinder: **NEY, Jörg-Werner**
**66773 Schwalbach (DE)**

(56) Entgegenhaltungen:
**WO-A1-2004/090559     US-A1- 2008 106 250**

**Beschreibung**

Die Erfindung betrifft ein Verfahren und eine Vorrichtung zur Überwachung zumindest eines Anlagenteils einer Photovoltaikanlage oder einer kompletten Photovoltaikanlage.

Eine Photovoltaikanlage mit einer Leistung im Bereich mehrerer Megawatt ist ein Kraftwerk, in dem mittels photovoltaischer Zellen die Strahlungsenergie der Sonne in elektrische Energie in Form von Gleichstrom umgewandelt wird. Eine photovoltaische Zelle dient als Wandler der Strahlungsenergie durch Ausnutzung des photovoltaischen Effektes. Aufgrund der geringen elektrischen Spannung einer einzelnen photovoltaischen Zelle (ca. 0,5 Volt) werden mehrere Zellen zu Photovoltaikmodulen zusammengefasst. Mehrere Photovoltaikmodule werden zu in Reihe geschalteten Strings verschaltet.

Eine Photovoltaikanlage umfasst somit üblicherweise eine Anzahl an Photovoltaikmodulen, welche jeweils eine Vielzahl elektrisch miteinander verschalteter photovoltaischer Zellen umfassen. Zur Einspeisung des von der Photovoltaikanlage erzeugten Gleichstroms in das öffentliche Stromnetz muss der Gleichstrom gegebenenfalls mittels Wechselrichtern in Wechselstrom umgewandelt werden. Zur Verbindung einzelner Photovoltaikmodule miteinander und/oder mit dem öffentlichen Stromnetz und/oder einem Verbraucher ist mindestens ein elektrisches Leitungssystem, gegebenenfalls weiterhin Koppelkästen und/oder Generatorkästen, in denen elektrisch ein Zusammenschluss von Photovoltaikmodulen erfolgt, vorgesehen.

Dabei nehmen Photovoltaikanlagen mit einer Leistung im Bereich mehrerer Megawatt eine große Anlagenfläche ein, die meist größer als ein Quadratkilometer ist. Häufig sind Photovoltaikanlagen auch stark verzweigt, wobei gegebenenfalls voneinander beabstandete freie und einer hohen Sonneneinstrahlung unterliegende Areale zur Aufstellung von Photovoltaikmodulen umfassend eine Vielzahl photovoltaischer Zellen genutzt werden. Der Abstand zwischen einzelnen Photovoltaikmodulen einer Photovoltaikanlage kann dabei mehr als einen Kilometer betragen. Die Geometrie einer Photovoltaikanlage und die Abstände zwischen einzelnen Photovoltaikmodulen hängen von der oder den zur Verfügung stehenden Grundstücksfläche(n) ab. Dabei wird die Anordnung und Anzahl von Betriebsgebäuden bevorzugt so gewählt, dass die Abstände der einzelnen Photovoltaikmodule zu Betriebsgebäuden möglichst gleichmäßig ausgeführt und die stromführenden Leitungen zwischen Photovoltaikmodulen und Betriebsgebäuden möglichst gleich oder ähnlich lang ausgebildet sind. Die stromführenden Leitungen werden bis zu einer Länge von maximal etwa 1200 m, bevorzugt nicht länger als etwa 500 m, ausgeführt.

Derartige Photovoltaikanlagen sind meist personell nicht besetzt, so dass ein Defekt in einem Teil der weitläufigen Photovoltaikanlage, sei es durch eine Anzahl defekter photovoltaischer Zellen und/oder durch ein oder mehrere defekte Photovoltaikmodule und/oder durch einen oder mehrere Brüche von elektrischen Leitungen im Leitungssystem der Anlage und/oder durch einen Defekt an einem oder mehreren Wechselrichtern, oft über einen längeren Zeitraum unerkannt bleibt und ein verminderter Ertrag der Anlage resultiert. Eine Überwachung aller Bereiche einer weitläufigen Photovoltaikanlage, insbesondere mittels Bedienpersonals, bedarf eines hohen finanziellen und/oder technischen Aufwands und ist daher unrentabel.

Um dennoch eine Überwachung von Photovoltaikanlagen zu ermöglichen, werden bereits verschiedene Selbstdiagnosesysteme eingesetzt, die nachfolgend aufgeführt sind.

Ein erstes bekanntes Selbstdiagnosesystem beruht darauf, dass die Summenströme einzelner Photovoltaikmodule, die an einem Wechselrichter zusammengeführt werden, miteinander verglichen werden. Sobald ein Summenstrom im Vergleich mit den weiteren Summenströmen als zu niedrig erkannt wird, wird eine Fehlermeldung ausgegeben. Dabei Treten im Tagesverlauf häufig Fehlermeldungen auf, da es aufgrund von Teilverschattung der Photovoltaikanlage aufgrund wechselnder Bewölkung immer wieder zu einer Abweichung eines oder mehrerer Summenströme von einem in einem anderen, stärker von der Sonne beschienenen Teil der Anlage produzierten Summenstroms kommt.

Ein zweites bekanntes Selbstdiagnosesystem beruht darauf, dass die aktuellen Leistungen von unterschiedlichen Wechselrichtern miteinander verglichen werden. Sobald eine aktuelle Leistung im Vergleich mit den weiteren Leistungen als zu niedrig erkannt wird, wird eine Fehlermeldung ausgegeben. Es tritt hierbei allerdings das gleiche Problem auf wie beim ersten Selbstdiagnosesystem.

Ein drittes bekanntes Selbstdiagnosesystem basiert auf der Bildung eines Verhältnisses zwischen der aktuell erzielten Leistung und der theoretisch erzielbaren Leistung der Photovoltaikanlage aufgrund einer gemessenen Solarstrahlungsleistung. Problematisch ist hierbei, dass aufgrund wechselnder Umweltbedingungen, insbesondere wechselnder Windgeschwindigkeiten und/oder witterungsbedingter und/oder jahreszeitlich bedingter Sonneneinstrahlung, eine Vergleichbarkeit von an unterschiedlichen Tagen des Jahres ermittelten Leistungsverhältnissen nicht möglich ist.

Ein viertes bekanntes Selbstdiagnosesystem beruht darauf, dass normierte Energien unterschiedlicher Wechselrichter miteinander verglichen werden. Es tritt hierbei allerdings das gleiche Problem auf wie beim dritten Selbstdiagnosesystem.

Die Veröffentlichung "Überwachung/Monitoring von Photovoltaikanlagen", M. D'Souza, L. Herzog, Bulletin SEV/VSE 10/94, S. 27 - 28, beschreibt ein Konzept für eine Überwachungseinrichtung zur Ertragssicherung von Photovoltaikanlagen.

Die Veröffentlichung "Analyse des Betriebsverhaltens von Photovoltaikanlagen durch normierte Darstellung von Energieeintrag und Leistung", H. Häberlein, C. Beutler, Bulletin SEV/VSE 4/95, S. 25 - 33, beschreibt eine Möglichkeit, Photovoltaikanlagen verschiedener Größen und örtlicher Anbringung miteinander zu vergleichen. Erfahrungen aus Photovoltaikanlagen in der Größenordnung von mehreren Megawatt haben allerdings gezeigt, dass Teilverschattungen der Photovoltaikanlage durch Bewölkung in einem automatisierten Überwachungssystem zu viele Falschfehlermeldungen produzieren, wenn der Quotient aus Istwert zu Sollwert auf Leistungsebene, bzw. auf Leistungsmittelwerten mit kurzen Zeitintervallen, mit einem anlagenspezifischen Referenzwert verglichen werden.

US 2008/0106250 beschreibt ein Verfahren zur Ubernachung einen photovoltaikanlage.

Es ist Aufgabe der Erfindung, ein demgegenüber verbessertes Verfahren und eine verbesserte Vorrichtung zur Überwachung zumindest eines Anlagenteils einer Photovoltaikanlage bereitzustellen.

Die Aufgabe wird für das Verfahren zur Überwachung zumindest eines Anlagenteils einer Photovoltaikanlage mit folgenden Schritten gelöst:

-   Ermittlung einer temperaturkompensierten Tages-Solarstrahlungsenergie $H_{Tagkomp}$ in $Wh/m^2$ des mindestens einen Anlagenteils, wobei

$$H_{Tagkomp} = \int_{Sonnenaufgang}^{Sonnenuntergang} G * \left(1 - (T - 25K) * \gamma_{P_{MPP(T)}}\right) dt$$

mit

G = Solarstrahlungsleistung in $W/m^2$,

T = Temperatur des mindestens einen Anlagenteils in K,

$\gamma_{P_{MPP(T)}}$ = Temperaturkoeffizient mindestens eines Photovoltaikmoduls in 1/K des mindestens einen Anlagenteils bei Maximalleistung;

-   Ermittlung eines temperaturkompensierten Leistungsverhältnisses $PR_{Tagkomp}$ in % , wobei

$$PR_{Tagkomp} = \frac{\left(\dfrac{E_{Tag}}{P_{theo}}\right)}{\left(\dfrac{H_{Tagkomp}}{1000\dfrac{W}{m^2}}\right)} * 100\% \quad ,$$

mit

$E_{Tag}$ = Tagesenergie des mindestens einen Anlagenteils in kWh,

$P_{theo}$ = maximal mögliche Leistung in kW der Photovoltaikanlage bei Standardtestbedingungen; und

-   Vergleich des ermittelten temperaturkompensierten Leistungsverhältnisses $PR_{Tagkomp}$ mit einem Leistungsverhältnis-Sollwert für den mindestens einen Anlagenteil, wobei eine negative Abweichung des ermittelten temperaturkompensierten Leistungsverhältnis $PR_{Tagkomp}$ vom Leistungsverhältnis-Sollwert für den mindestens einen Anlagenteil auf die Notwendigkeit einer Überprüfung und gegebenenfalls Reparatur eines Defekt des mindestens einen Anlagenteils hinweist.

Ein Temperaturkoeffizient $\gamma_{P_{MPP}}$ eines Photovoltaikmoduls in 1/K bei Maximalleistung ist häufig in einem Hersteller-Datenblatt zu einem Photovoltaikmodul als Konstante über einen bestimmten Temperaturbereich angegeben. Dieser Temperaturbereich umfasst häufig alle Temperaturen, denen ein Photovoltaikmodul üblicherweise ausgesetzt ist. Im Hinblick auf hocheffiziente Photovoltaikmodule, die in bestimmten Temperaturbereichen unterschiedliche Temperaturkoeffizienten $\gamma_{P_{MP}}$ aufweisen können, ist in der Formel die Temperaturabhängigkeit des Temperaturkoeffizienten $\gamma_{P_{MPP(T)}}$ von der Temperatur T des mindestens einen Anlagenteils berücksichtigt.

Im Unterschied zum Stand der Technik wird erfindungsgemäß die Strahlungsleistung auf Basis des Temperaturverhaltens des verwendeten Photovoltaikmoduls temperaturkorrigiert, und nicht die Solargeneratorleistung. Die temperaturkorrigierte Strahlungsleistung wird zur temperaturkorrigierten Tagesstrahlungsenergie aufsummiert. Die Tagesbasis ist ein Erfahrungswert der gezeigt hat, dass sich die Unterschiede aus der bewölkungsbedingten Teilverschattung einer Photovoltaikanlage üblicherweise ausreichend ausgleichen.

Der Wert Ptheo wird aus Leistungsangaben zu in der Photovoltaikanlage eingesetzten Photovoltaikmodulen, die unter Standardtestbedingungen gelten, aufsummiert. Als Standardtestbedingungen gelten dabei eine Solarstrahlungsleistung von 1000 W/m$^2$, eine Temperatur des Photovoltaikmoduls von 25 °C und weiterhin eine relative Luftmassenzahl AM = 1,5, wobei AM eine Dicke der vom Sonnenlicht durchdrungenen Atmosphäre repräsentiert.

Die Aufgabe wird für die Vorrichtung zur Durchführung des erfindungsgemäßen Verfahrens gelöst, indem sie folgendes umfasst:

- mindestens eine erste Einrichtung zur Ermittlung einer Temperatur T des mindestens einen Anlagenteils;
- mindestens eine zweite Einrichtung zur Ermittlung einer Solarstrahlungsleistung G im mindestens einen Anlagenteils;
- mindestens eine dritte Einrichtung zur Ermittlung von Werten zur Berechnung einer Tagesenergie $E_{Tag}$ des mindestens einen Anlagenteils; und
- mindestens eine vierte Einrichtung zur Berechung der Tagesenergie $E_{Tag}$ des mindestens einen Anlagenteils und/ oder zur Berechnung einer temperaturkompensierten Tages-Solarstrahlungsenergie $H_{Tagkomp}$ des mindestens einen Anlagenteils und/oder zur Berechnung eines temperaturkompensierten Leistungsverhältnisses $PR_{Tagkomp}$ des mindestens einen Anlagenteils und/oder weiterhin zum Vergleich des temperaturkompensierten Leistungsverhältnisses $PR_{Tagkomp}$ mit einem Leistungsverhältnis-Sollwert für den mindestens einen Anlagenteil.

Eine Verwendung einer erfindungsgemäßen Vorrichtung unter Ausführung eines erfindungsgemäßen Verfahrens als Selbstdiagnoseeinrichtung zur Erkennung mindestens eines Defekts in mindestens einem Anlagenteil einer Photovoltaikanlage oder einer gesamten Photovoltaikanlage ist ideal.

Das erfindungsgemäße Verfahren und die erfindungsgemäße Vorrichtung ermöglichen eine weitgehende Kompensation der sich ändernden Umwelteinflüsse, so dass eine Vergleichbarkeit von an unterschiedlichen Tagen oder zu unterschiedlichen Jahreszeiten bestimmten Leistungsverhältnissen möglich ist, wobei der Ertrag einer Photovoltaikanlage oder eines Anlagenteils der Photovoltaikanlage über einen langen Zeitraum kontinuierlich verfolgt werden kann. Es können nicht nur wie bisher Anlagenteile miteinander verglichen werden, sondern es werden die Werte der Anlagenteile mit für das jeweilige Anlagenteil typischen Sollwerten verglichen.

Ein für einen Anlagenteil oder die gesamte Photovoltaikanlage typischer Sollwert weicht dabei von 100% um die näherungsweise als konstant zu betrachtenden Verluste in Leitungen oder sonstigen Bauteilen der Anlage ab. Da der Vergleich nicht anhand von aktuellen Werten des erzeugten Stroms und der Leistung erfolgt, sondern auf Basis von Tageswerten, heben sich über den Tag hinweg auftretende Umwelteinflüsse, wie zum Beispiel wechselnde Bewölkung, auf und es werden weniger Fehlermeldungen produziert.

Es wurde erkannt, dass die wechselnden Umgebungseinflüsse sich insbesondere in einer merklichen Änderung der Umgebungstemperatur der Photovoltaikanlage bemerkbar machen. Dabei hängt die Temperatur T eines Photovoltaikmoduls eines Anlagenteils im Wesentlichen von der Solarstrahlung, der Umgebungstemperatur und der Windsituation ab. Der Einfluss der Solarstrahlung auf die Temperatur T eines Photovoltaikmoduls kann weiterhin unterteilt werden in einen direkten Einfluss aufgrund einer Erwärmung durch Absorption der Solarstrahlung und einen indirekten Einfluss aufgrund einer Erwärmung des Halbleitermaterials aufgrund eines der Solarstrahlung entsprechenden Stromflusses im Halbleitermaterial.

Der Wirkungsgrad einer photovoltaischen Zelle ändert sich bei Temperaturwechseln in Abhängigkeit vom Temperaturkoeffizienten $\gamma_{PMPP}(T)$. Im Temperaturkoeffizienten $\gamma_{PMPP(T)}$ spiegeln sich zwei gegenläufige Effekte wieder. Bei einem Anstieg der Temperatur T tritt einerseits ein Anstieg des Innenwiderstands des Halbleitermaterials der photovoltaischen Zellen und andererseits ein Ansteigen der Eigenleitfähigkeit des Halbleitermaterials der photovoltaischen Zellen auf. Üblicherweise liegt der Temperaturkoeffizient $\gamma_{PMPP(T)}$ einer photovoltaischen Zelle im Bereich von ca. -0,43 %/K bis -0,5 %/K bei Maximalleistung. Die Leistung einer photovoltaischen Zelle reduziert sich demnach beispielsweise bei einem Anstieg der Temperatur T eines Photovoltaikmoduls um 30 K etwa um 12,9 bis 15 %.

Die mittels des erfindungsgemäßen Verfahrens und der erfindungsgemäßen Vorrichtung erzielbare Kompensierung des Einflusses der Umgebung, insbesondere der Umgebungstemperatur, Windstärke und Solarstrahlung, auf die von photovoltaischen Zellen erzeugte Leistung ermöglicht es, unmittelbar die Änderungen in der Leistungsfähigkeit von zumindest ein Photovoltaikmodul umfassenden Anlagenteilen einer Photovoltaikanlage zu detektieren. Lediglich die tatsächlich auf einem Defekt in der Photovoltaikanlage basierenden Änderungen werden erfasst und die auf einer Änderung der Umwelteinflüsse beruhenden Fehlermeldungen vermieden.

Ein Anlagenteil umfasst dabei bevorzugt mindestens ein Photovoltaikmodul und mindestens einen Wechselrichter.

Eine Verwendung der erfindungsgemäßen Vorrichtung bzw. des erfindungsgemäßen Verfahrens in einem oder jeweils mehreren Anlagenteilen einer Photovoltaikanlage ermöglicht eine Selbstdiagnose der Anlage, wobei ein Defekt erkannt und gegebenenfalls örtlich lokalisiert und einem Anlagenteil unmittelbar zugeordnet werden kann. Dadurch kann die Notwendigkeit einer Überprüfung und gegebenenfalls Reparatur des betroffenen Anlagenteils rasch erkannt und in Folge schnell und unkompliziert vor Ort durchgeführt werden. Aufgrund der zeitnahen Erkennung von tatsächlich vorliegenden Defekten in der Photovoltaikanlage und der Tatsache, dass Fehlmeldungen hinsichtlich des Anlagenzustands so gut wie nicht mehr auftreten, ergeben sich ein gesteigerter Ertrag und ein deutlich verminderter Wartungsaufwand für die Photovoltaikanlage.

In einer Photovoltaikanlage mit einer Leistung im Bereich mehrerer Megawatt werden bevorzugt an mehr als einer, insbesondere an mehr als zwei Stellen erste und/oder zweite Einrichtungen der Vorrichtung installiert.

Prinzipiell genügt die Erfassung der Temperatur $T$ mittels einer einzigen ersten Einrichtung an einem Photovoltaikmodul in einem Anlagenteil und die Erfassung der Solarstrahlungsleistung $G$ mittels einer zweiten Einrichtung in einem Anlagenteil, insbesondere für ein Photovoltaikmodul, sofern der jeweilige Anlagenteil hinsichtlich seiner Temperatur und Solarstrahlungsleistung $G$ repräsentativ auch für alle anderen Anlagenteile, insbesondere Photovoltaikmodule, der Photovoltaikanlage ist. Häufig ist es aber der Fall, dass aufgrund der örtlichen Gegebenheiten eine einzige Messung der Temperatur $T$ und eine einmalige Erfassung der Solarstrahlungsleistung $G$ nicht auf alle anderen Anlagenteile, insbesondere Photovoltaikmodule, übertragbar ist. In diesem Fall ist es von Vorteil, alle Anlagenteile, insbesondere Photovoltaikmodule, deren Temperaturen $T$ signifikant voneinander abweichen können, separat mit jeweils einer ersten Einrichtung zur Messung der Temperatur $T$ auszustatten. Weiterhin ist es von Vorteil, alle Anlagenteile, insbesondere Photovoltaikmodule, für welche die Sonnenbestrahlung signifikant unterschiedlich ausfallen kann, mit jeweils einer zweiten Einrichtung zur Ermittlung der Solarstrahlungsleistung $G$ auszustatten. Ein signifikanter Unterschied in der Temperatur $T$ oder in der Sonnenbestrahlung liegt dabei insbesondere dann vor, wenn das Ergebnis für $H_{Tagkomp}$ um mehr als etwa 1,5 % verfälscht wird.

Die mindestens eine erste Einrichtung der Vorrichtung zur Ermittlung einer Temperatur $T$ eines Photovoltaikmoduls des mindestens einen Anlagenteils ist bevorzugt der Photovoltaikanlage unmittelbar örtlich zugeordnet. Als eine erste Einrichtung wird insbesondere ein digitales Thermometer oder eine Temperatursensor mit normiertem Analogsignal eingesetzt, um die Temperatur $T$ im Bereich der Photovoltaikanlage oder eines ihrer Anlagenteile zu ermitteln. Bevorzugt befindet sich eine erste Einrichtung an einem Photovoltaikmodul, insbesondere in Form eines PT 100-Temperatursensors an der Rückseite, d.h. der Sonneneinstrahlung abgewandten Seite, eines Photovoltaikmoduls. Die gemessenen Temperaturen $T$, gegebenenfalls pro Messstelle, werden an die mindestens eine vierte Einrichtung der Vorrichtung übermittelt.

Es hat sich bewährt, wenn je eine erste Einrichtung für je ein Photovoltaikmodul umfassend eine Vielzahl von photovoltaischen Zellen der Photovoltaikanlage oder je eine erste Einrichtung je String der Photovoltaikanlage vorhanden ist. Dadurch lassen sich bestimmte Lagen von Photovoltaikmodulen an Berghängen, beispielsweise unterschiedliche Temperaturen eines Moduls an einem nach Osten oder Westen ausgerichteten Berghang gegenüber einem Modul an einem nach Süden ausgerichteten Berghang usw. ausreichend berücksichtigen.

Für das Verfahren hat es sich bewährt, wenn der mindestens eine Anlagenteil umfassend mindestens ein Photovoltaikmodul mit einer Vielzahl an photovoltaischen Zellen und/oder umfassend mindestens einen Wechselrichter gewählt wird. Es kann aber auch die gesamte Photovoltaikanlage mittels des Verfahrens überwacht werden, insbesondere wenn es sich um Anlagen mit einer geringen Flächenausdehnung von bis zu 0,5 km$^2$ handelt.

Die mindestens eine zweite Einrichtung zur Ermittlung der Solarstrahlungsleistung $G$ des mindestens einen Anlagenteils ist bevorzugt der Photovoltaikanlage örtlich unmittelbar zugeordnet, insbesondere einem Photovoltaikmodul. Zur Ermittlung der Solarstrahlungsleistung $G$ umfasst eine zweite Einrichtung vorzugsweise mindestens einen Solarstrahlungssensor, insbesondere mit normiertem Analogsignal. Mittels eines Solarstrahlungssensors werden Einzelwerte der Solarstrahlungsleistung $G$ über einen bestimmten Zeitraum hinweg erfasst und an die mindestens eine vierte Einrichtung der Vorrichtung übermittelt.

Die mindestens eine dritte Einrichtung zur Ermittlung von Werten zur Berechnung der Tagesenergie $E_{Tag}$ umfasst vorzugsweise mindestens ein, insbesondere berührungslos arbeitendes, Gleichstrommessgerät und mindestens ein Gleichspannungsmessgerät. Jeweils mindestens eine dritte Einrichtung ist dabei bevorzugt je einem Wechselrichter der Photovoltaikanlage zugeordnet.

Es werden bevorzugt Wechselrichter mit einem oder mehreren DC-Eingängen, insbesondere vier DC-Eingängen, eingesetzt. Bei einem Wechselrichter mit nur einem DC-Eingang werden insbesondere eine Gleichstrom- und eine Gleichspannungsmessung durchgeführt. Bei einem besonders bevorzugten Wechselrichter mit vier DC-Eingängen werden insbesondere vier Gleichstrommessungen und eine Gleichspannungsmessung durchgeführt. Die erfassten Strom- und Spannungssignale werden an die mindestens eine vierte Einrichtung der Vorrichtung übertragen. Dort werden die über einen Tag ermittelten Produkte aus Strom und Spannung zur Tagesenergie $E_{Tag}$ aufsummiert.

Die mindestens eine vierte Einrichtung der Vorrichtung, beispielsweise eine Recheneinheit wie ein PC, ist insbesondere mit einer Software ausgestattet, welche eine Berechnung der Werte für $E_{Tag}$ und/oder $H_{Tagkomp}$ und/oder $PR_{Tagkompt}$, sowie gegebenenfalls zum Vergleich von aktuellen Werten für $PR_{Tagkomp}$ mit früher gemessenen Werten für $PR_{Tagkomp}$, ermöglicht. Die Werte für den Leistungsverhältnis-Sollwert sowie $P_{theo}$ und $\gamma_{P_{MPP}(T)}$. sind dazu in der mindestens einen vierten Einrichtung hinterlegt.

Die Ermittlung von $E_{Tag}$, weiterhin des temperaturkompensierten Leistungsverhältnis $PR_{Tagkomp}$ und der Vergleich zwischen dem ermittelten temperaturkompensierten Leistungsverhältnis $PR_{Tag}$-komp und dem Leistungsverhältnis-Sollwert für den mindestens einen Anlagenteil umfassend mindestens eine Photovoltaikmodul wird bevorzugt automatisch mittels der mindestens einen vierten Einrichtung durchgeführt. Alternativ können die Berechnungen selbstverständlich auch von Bedienpersonal der Photovoltaikanlage manuell oder halbautomatisch mittels der mindestens einen vierten Einrichtung durchgeführt werden. Dabei können zur Erfassung der von der/den ersten, zweiten und dritten Einrichtung(en) übermittelten Messwerte eine einzige oder mehrere vierte Einrichtungen, insbesondere Recheneinheiten, eingesetzt werden. Die Berechnungen können mittels einer einzigen vierten Einrichtung, insbesondere auf der gleichen Recheneinheit, durchgeführt werden.

Der Vergleich zwischen dem ermittelten temperaturkompensierten Leistungsverhältnis $PR_{Tagkomp}$ und dem Leistungsverhältnis-Sollwert für den mindestens einen Anlagenteil wird insbesondere nur dann durchgeführt, wenn ein festgelegter Minimalwert für $H_{Tagkomp}$ erreicht oder überschritten wird. Es wird damit erreicht, dass die in der Photovoltaikanlage auftretenden, oben erwähnten Verluste, wie zum Beispiel Leitungsverluste, Verluste an Transformatoren oder Verluste an Wechselrichtern, als näherungsweise konstant betrachtet werden können.

Im Rahmen der Inbetriebnahme einer Photovoltaikanlage wird der Leistungsverhältnis-Sollwert hinsichtlich der einwandfrei funktionierenden Anlage oder zumindest eines Anlagenteils festgelegt. Dabei werden von einem, auf Basis der Leistungsangaben der vorhandenen Photovoltaikmodule berechenbaren, theoretisch möglichen Leistungsverhältnis-Wert die auftretenden Verluste abgezogen, die z.B. auf der Geometrie der Anlage beruhen und sich vor allem in Form von Leitungsverlusten äußern. Die Verluste können in der Praxis bis zu 3% betragen. Dazu tragen neben den Leitungsverlusten aber auch Toleranzen in der Messwerterfassung, Toleranzen in den tatsächlichen Leistungen der Photovoltaikmodule, Verluste im Bereich der Wechselrichter, Anpassungsverluste usw. bei. Vom dem daraus berechneten, mit der Anlage oder einem Anlagenteil tatsächlich erreichbaren Leistungsverhältnis-Wert werden als Sicherheit üblicherweise nochmals 1 bis 2% abgezogen, um die Dynamik, welche sich aufgrund unterschiedlicher Klimabedingungen ergibt, zu kompensieren. Das Ergebnis bildet den Leistungsverhältnis-Sollwert.

Sofern auch an Tagen mit besonders geringer Sonneneinstrahlung gemessen werden soll, muss der Wert für den Leitungsverhältnis-Sollwert korrigiert werden, da die auftretenden Verluste hier nicht mehr als konstant zu betrachten sind.

Bevorzugt wird bei einer negativen Abweichung des ermittelten temperaturkompensierten Leistungsverhältnis $PR_{Tagkomp}$ vom Leistungsverhältnis-Sollwert für den mindestens einen Anlagenteil mindestens ein Warnsignal ausgegeben. Dies kann über ein optisches und/oder akustisches Warnsignal erfolgen.

Es wird bevorzugt auch der Anlagenteil angezeigt und/oder benannt, der die Ursache für das Warnsignal darstellt.

Bevorzugt weist die erfindungsgemäße Vorrichtung zur Ausgabe des mindestens einen Warnsignals bei Auftreten einer negativen Abweichung des ermittelten temperaturkompensierten Leistungsverhältnis $PR_{Tagkomp}$ vom Leistungsverhältnis-Sollwert weiterhin mindestens eine fünfte Einrichtung auf. Bei der fünften Einrichtung handelt es sich insbesondere um einen Bildschirm oder dergleichen zur optischen Ausgabe und/oder eine Hupe oder dergleichen zur akustischen Ausgabe des Warnsignals.

Ein Warnsignal kann alternativ oder zusätzlich aber auch mittels der mindestens einen vierten Einrichtung generiert werden.

Es ist besonders bevorzugt, wenn mittels der mindestens einen vierten Einrichtung und/oder der mindestens einen fünften Einrichtung eine Fernüberwachung der Photovoltaikanlage durchführbar ist. Dazu ist die mindestens eine vierte Einrichtung und/oder die mindestens eine fünfte Einrichtung räumlich getrennt von der Photovoltaikanlage aufgestellt, so dass eine Anwesenheit einer Bedienperson vor Ort im Bereich der Photovoltaikanlage überflüssig ist. Dies spart Kosten für das Bedienpersonal und ermöglicht dennoch ein schnelles Eingreifen bei Defekten in der Anlage.

Das nachfolgende Beispiel soll die Erfindung für eine Photovoltaikanlage mit einer maximalen Leistung $P_{theo}$ von 15 MW näher erläutern. Die Anlage überspannt dabei eine Fläche von etwa 1 km$^2$. Es ist eine Anzahl von 69340 Photovoltaikmodulen mit einer mittleren Leistung von etwa 216,5 W pro Modul vorhanden. Weiterhin sind 36 Wechselrichter mit 400 kVA Leistung und 4 DC-Eingängen sowie 6 Wechselrichter mit 100 kVA Leistung und einem DC-Eingang vorhanden, denen die Module zugeordnet sind. Jedem der 150 vorhandenen DC-Eingänge sind durchschnittlich 23 sogenannte Strings in Parallelschaltung zugeordnet, wobei ein jeder String aus 20 in Reihe geschalteten Photovoltaikmodulen besteht. Die Photovoltaikanlage befindet sich auf einem ebenen, rechteckigen Grundstück mit 1,2 km x 0,8 km Fläche. Es sind zwei Betriebsgebäude vorhanden, in welchen sich jeweils die Hälfte der vorhandenen Wechselrichter befindet.

Weiterhin sind zwei erste Einrichtungen zur Messung der Temperatur T im Bereich der Photovoltaikanlage in Form digitaler Temperaturfühler installiert. Zudem sind zwei zweite Einrichtungen zur Erfassung der Solarstrahlungsleistung G im Bereich der Anlage vorhanden. Pro Wechselrichter ist jeweils eine dritte Einrichtung installiert. Jede dritte Einrichtung umfasst dabei jeweils ein Gleichspannungsmessgerät und pro DC-Eingang des Wechselrichters je ein Messgerät zur berührungslosen Gleichstrommessung des von den Photovoltaikmodulen erzeugten Summenstroms.

Beispiel:

Es erfolgt eine Berechnung der temperaturkompensierten Tages-Solarstrahlungsenergie $H_{Tagkomp}$ eines Anlagenteils, welcher einem der zwei Betriebsgebäude zugeordnet ist:

$$H_{Tagkomp} = \int_{Sonnenaufgang}^{Sonnenuntergang} G * \left(1 - (T - 25K) * \gamma_{P_{MPP}(T)}\right) dt = 6220 \ \text{Wh/m}^2$$

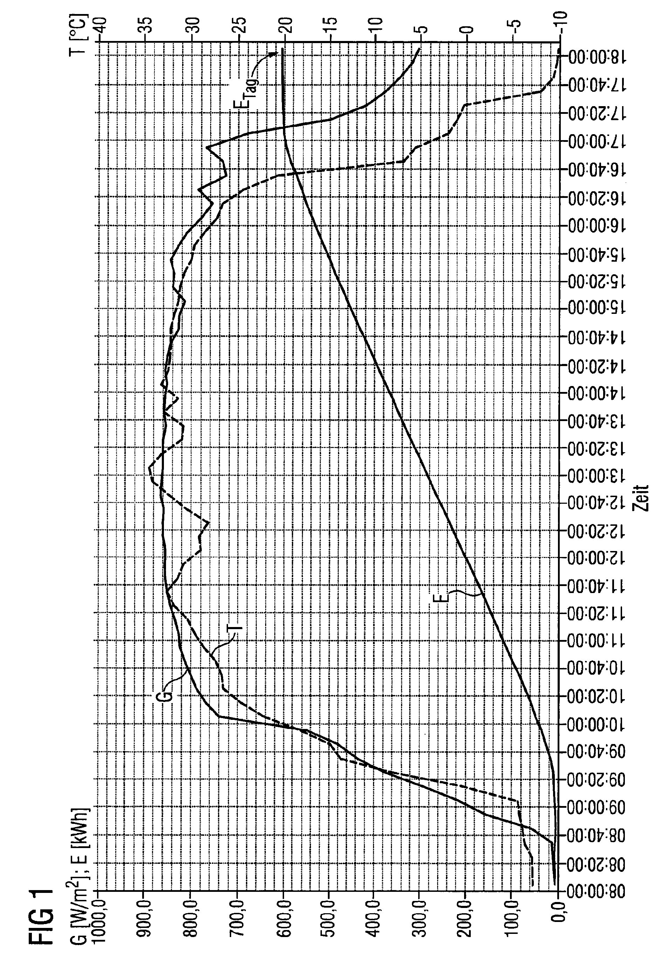

mit $\gamma_{PMPP(T)}$ = 0,0045 1/K im auftretenden Temperaturbereich; und Messwerte gemäß FIG 1 für G, $E_{Tag}$ und T
Nun erfolgt eine Ermittlung des temperaturkompensierten Leistungsverhältnisses $PR_{Tagkomp}$:

$$PR_{Tagkomp} = \frac{\left(\dfrac{E_{Tag}}{P_{theo}}\right)}{\left(\dfrac{H_{Tagkomp}}{1000 \dfrac{W}{m^2}}\right)} * 100\% = 95,6 \ \%$$

mit

$E_{Tag}$ = 599,35 kWh, $P_{theo}$ = 100,8 kW, $H_{Tagkomp}$ = 6220 Wh/m2 Nachfolgend wird ein Vergleich des ermittelten temperaturkompensierten Leistungsverhältnisses $PR_{Tagkomp}$ mit einem Leistungsverhältnis-Sollwert für den ausgewählten Anlagenteil vorgenommen:
$PR_{Tagkomp}$ = 95, 6 %
Leistungsverhältnis-Sollwert = 92 %

Fall 1: $PR_{Tagkomp} \geq$ Leistungsverhältnis-Sollwert

Sofern ein Vorliegen von Fall 1 festgestellt wird, wird dies als volle Funktionsfähigkeit des ausgewählten Anlagenteils gewertet.

Fall 2: $PR_{Tagkomp} <$ Leistungsverhältnis-Sollwert

Sofern ein Vorliegen von Fall 2 festgestellt wird, wird ein Defekt für den ausgewählten Anlagenteil angenommen und eine Warnmeldung ausgegeben, die den Anlagenteil identifiziert und eine Überprüfung und gegebenenfalls Wartung bzw. Reparatur des Anlagenteils durch Bedienpersonal auslöst.
Hier liegt für den ausgewählten Anlagenteil der Fall 1 vor, so dass keine Überprüfung der Photovoltaikanlage im überwachten Anlagenteil erfolgt.

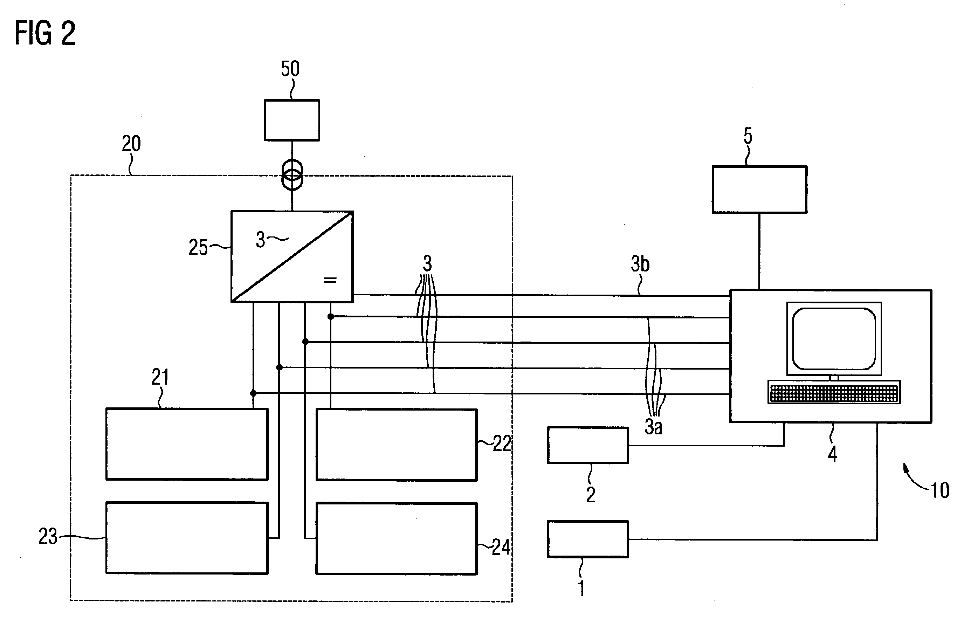

Die Figuren 1 und 2 sollen die Messwerterfassung sowie den Aufbau einer Vorrichtung beispielhaft erläutern. So zeigt:

FIG 1    ein Diagramm, welches die über einen Tag erfassten Messwerte an einer Photovoltaikanlage aufzeigt; und
FIG 2    eine schematische Darstellung einer Vorrichtung zur Überwachung mindestens eines Anlagenteils einer Photovoltaikanlage.

FIG 1 zeigt ein Diagramm, welches die über einen Tag zwischen 8:00 Uhr und 18:00 Uhr erfassten Messwerte an einer Photovoltaikanlage aufzeigt. Dabei werden die Temperatur eines Photovoltaikmoduls T in °C (noch umzurechnen in Kelvin), die Summe der Energiewerte E des Photovoltaikmoduls in kWh, die um 18:00 Uhr die Tagesenergie $E_{Tag}$ in kWh ergeben, und die Solarstrahlungsleistung G in W/m2 eines Anlagenteils aufgezeichnet.
FIG 2 zeigt eine schematische Darstellung einer Vorrichtung 10 zur Überwachung mindestens eines Anlagenteils einer Photovoltaikanlage 20. Der Anlagenteil der Photovoltaikanlage 20 umfasst die Photovoltaikmodule 21, 22, 23, 24, die mit einem Wechselrichter 25 verbunden sind. Im Wechselrichter 25 wird der in den Photovoltaikmodulen 21, 22, 23, 24 erzeugte Gleichstrom in Wechselstrom umgewandelt und in ein Stromnetz 50 eingespeist. Die Vorrichtung 10 umfasst eine erste Einrichtung 1 in Form eines Temperatursensors zur Erfassung der Temperatur T der Photovoltaikmodule 21, 22, 23, 24. Weiterhin umfasst die Vorrichtung 10 eine zweite Einrichtung 2 zur Messung der Solarstrahlungsleistung G im Bereich der Photovoltaikmodule 21, 22, 23, 24. Die erste Einrichtung 1 und die zweite Einrichtung 2 sind der Photovoltaikanlage 20 räumlich unmittelbar zugeordnet bzw. an einem oder in unmittelbarer Nähe eines Photovoltaikmoduls 21, 22, 23, 24 platziert.

Die Vorrichtung 10 umfasst zudem eine dritte Einrichtung 3 zur Erfassung von Strom- und Spannungswerten zur Berechnung der Tagesenergie $E_{Tag}$. Der Wert $E_{Tag}$ entspricht hier dem Summenwert E gemäß FIG 1 um 18:00 Uhr. Die dritte Einrichtung 3 weist dazu ein Gleichspannungsmessgerät 3b auf, das die Gleichspannung am Wechselrichter 25 erfasst. Weiterhin weist die dritte Einrichtung vier berührungslos arbeitende Gleichstrommessgeräte 3a auf, die jeweils einem DC-Eingang des Wechselrichters 25 zugeordnet sind und die von den Photovoltaikmodulen 21, 22, 23, 24 erzeugten Gleichströme erfassen. Die von der ersten Einrichtung 1, der zweiten Einrichtung 2 und der dritten Einrichtung 3 erfassten Werte werden an eine vierte Einrichtung 4 der Vorrichtung 10 übermittelt. Die vierte Einrichtung 4 ist hier eine Recheneinheit, in welcher die zur Berechnung des temperaturkompensierten Leistungsverhältnisses $PR_{Tagkomp}$ benötigten Daten hinterlegt und mittels der ersten Einrichtung 1, zweiten Einrichtung 2 und dritten Einrichtung 3 erfassten Messwerte erfasst und verarbeitet werden. Die Berechnungen, die zur Ermittlung des temperaturkompensierten Leistungsverhältnisses $PR_{Tagkomp}$ erforderlich sind, werden mittels der Recheneinheit durchgeführt. Das Ergebnis der Berechnungen, d.h. die Feststellung, ob und gegebenenfalls in welchem Anlagenteil der Photovoltaikanlage 20 ein Defekt vorliegt, wird beispielsweise optisch und/oder akustisch über ein Warnsignal ausgegeben. Sofern dazu nicht bereits die vierte Einrichtung 4 geeignet ist, kann die Vorrichtung 10 optional eine fünfte Einrichtung 5 zur Ausgabe des Warnsignals aufweisen.

Bei einem Vorhandensein einer vierten Einrichtung 4 in Form eines PCs und einer fünften Einrichtung 5 in Form einer Hupe kann beispielsweise mittels des üblicherweise an einem PC vorhandenen Bildschirms ein optisches Warnsignal und mittels der Hupe ein akustisches Warnsignal erzeugt werden. Die dritte Einrichtung 3 ist der Photovoltaikanlage 20, wie bereits die erste Einrichtung 1 und die zweite Einrichtung 2, unmittelbar zugeordnet. Dagegen sind die vierte Einrichtung 4 und gegebenenfalls die fünfte Einrichtung 5 der Photovoltaikanlage 20 häufig nicht unmittelbar zugeordnet, sondern in einer größeren Entfernung dazu angeordnet, um eine Fernüberwachung der Photovoltaikanlage 20 durchführen zu können. Es ist offensichtlich, dass es für das Funktionieren des erfindungsgemäßen Verfahrens oder der erfindungsgemäßen Vorrichtung unbedeutend ist, welche Größe eine Photovoltaikanlage aufweist oder welche Anlagenteile oder welcher Zusammenschluss von Anlagenteilen mittels des erfindungsgemäßen Verfahrens überprüft bzw. mittels der erfindungsgemäßen Vorrichtung ausgestattet werden. Das erfindungsgemäße Verfahren und Vorrichtung können für unterschiedlichste Arten von Photovoltaikanlagen, beispielsweise mit photovoltaischen Zellen auf Siliziumbasis oder auf organischer Basis, insbesondere auf Polymerbasis, eingesetzt werden. Weiterhin ist es auch ohne Belang, ob wie viele Photovoltaikmodule, Wechselrichter, usw. vorhanden sind.

Generell kann ein Fachmann einen Anschluss der Photovoltaikanlage an lediglich einen Verbraucher oder mehrere Verbraucher oder aber an ein öffentliches Netz vorsehen, ohne dass der Grundgedanke der Erfindung verlassen wird.

**Patentansprüche**

1. Verfahren zur Überwachung zumindest eines Anlagenteils einer Photovoltaikanlage (20) mit folgenden Schritten:

- Ermittlung einer temperaturkompensierten Tages-Solarstrahlungsenergie $H_{Tagkomp}$ in Wh/m$^2$ des mindestens einen Anlagenteils, wobei

$$H_{Tagkomp} = \int_{Sonnenaufgang}^{Sonnenuntergang} G * \left(1 - (T - 25K) * \gamma_{P_{MPP(T)}}\right) dt$$

mit

G = Solarstrahlungsleistung in W/m$^2$,
T = Temperatur des mindestens einen Anlagenteils in K,
$\gamma_{P_{MPP(T)}}$ = Temperaturkoeffizient mindestens eines Photovoltaikmoduls des mindestens einen Anlagenteils in 1/K bei Maximalleistung;

- Ermittlung eines temperaturkompensierten Leistungsverhältnisses $PR_{Tagkomp}$ in % , wobei

$$PR_{Tagkomp} = \frac{\left(\dfrac{E_{Tag}}{P_{theo}}\right)}{\left(\dfrac{H_{Tagkomp}}{1000\dfrac{W}{m^2}}\right)} * 100\% \qquad ,$$

mit

$E_{Tag}$ = Tagesenergie des mindestens einen Anlagenteils in kWh,
$P_{theo}$ = maximal mögliche Leistung in kW der Photovoltaikanlage bei Standardtestbedingungen; und

- Vergleich des ermittelten temperaturkompensierten Leistungsverhältnisses $PR_{Tagkomp}$ mit einem Leistungsverhältnis-Sollwert für den mindestens einen Anlagenteil, wobei eine negative Abweichung des ermittelten temperaturkompensierten Leistungsverhältnis $PR_{Tagkomp}$ vom Leistungsverhältnis-Sollwert für den mindestens einen Anlagenteil auf die Notwendigkeit einer Überprüfung und gegebenenfalls Reparatur eines Defekt des mindestens einen Anlagenteils hinweist.

**2.** Verfahren nach Anspruch 1,
**dadurch gekennzeichnet, dass** der mindestens eine Anlagenteil umfassend mindestens ein Photovoltaikmodul (21, 22, 23, 24) mit einer Vielzahl an photovoltaischen Zellen und/oder umfassend mindestens einen Wechselrichter (25) gewählt wird.

**3.** Verfahren nach Anspruch 1 oder Anspruch 2,
**dadurch gekennzeichnet, dass** zur Ermittlung der Tagesenergie $E_{Tag}$ eine berührungslose Gleichstrommessung durchgeführt wird und ein dabei ermitteltes aktuelles Stromsignal mit einer an dem mindestens einen Anlagenteil aktuell gemessenen Gleichspannung multipliziert wird.

**4.** Verfahren nach einem der Ansprüche 1 bis 3,
**dadurch gekennzeichnet, dass** die Ermittlung des temperaturkompensierten Leistungsverhältnis $PR_{Tagkomp}$ und der Vergleich zwischen dem ermittelten temperaturkompensierten Leistungsverhältnis $PR_{Tagkomp}$ und dem Leistungsverhältnis-Sollwert für den mindestens einen Anlagenteil automatisch durchgeführt wird.

**5.** Verfahren nach einem der Ansprüche 1 bis 4,
**dadurch gekennzeichnet, dass** der Vergleich zwischen dem ermittelten temperaturkompensierten Leistungsverhältnis $PR_{Tagkomp}$ und dem Leistungsverhältnis-Sollwert für den mindestens einen Anlagenteil nur dann durchgeführt wird, wenn ein festgelegter Minimalwert für $H_{Tagkomp}$ erreicht oder überschritten wird.

**6.** Verfahren nach einem der Ansprüche 1 bis 5,
**dadurch gekennzeichnet, dass** bei einer negativen Abweichung des ermittelten temperaturkompensierten Leistungsverhältnis $PR_{Tagkomp}$ vom Leistungsverhältnis-Sollwert für den mindestens einen Anlagenteil mindestens ein Warnsignal ausgegeben wird.

**7.** Vorrichtung (10) zur Durchführung des Verfahrens nach einem der Ansprüche 1 bis 6, umfassend

- mindestens eine erste Einrichtung (1) zur Ermittlung einer Temperatur T des mindestens einen Anlagenteils;
- mindestens eine zweite Einrichtung (2) zur Ermittlung einer Solarstrahlungsleistung G im mindestens einen Anlagenteil;
- mindestens eine dritte Einrichtung (3) zur Ermittlung von Werten zur Berechnung einer Tagesenergie $E_{Tag}$ des mindestens einen Anlagenteils; und
- mindestens eine vierte Einrichtung (4) zur Berechung der Tagesenergie $E_{Tag}$ des mindestens einen Anlagenteils und/oder zur Berechnung einer temperaturkompensierten Tages-Solarstrahlungsenergie $H_{Tagkomp}$ des mindestens einen Anlagenteils und/oder zur Berechnung eines temperaturkompensierten Leistungsverhältnisses PR$_{Tagkomp}$ des mindestens einen Anlagenteils und/oder weiterhin zum Vergleich des temperaturkompensierten Leistungsverhältnisses PR$_{Tagkomp}$ mit einem Leistungsverhältnis-Sollwert für den mindestens einen Anlagenteil.

8. Vorrichtung nach Anspruch 7,
**dadurch gekennzeichnet, dass** die mindestens eine vierte Einrichtung (4) eingerichtet ist, folgende Berechnungen auszuführen:

- Ermittlung der temperaturkompensierten Tages-Solarstrahlungsenergie H$_{Tagkomp}$ in Wh/m$^2$, wobei

$$H_{Tagkomp} = \int_{Sonnenaufgang}^{Sonnenuntergang} G * \left(1 - (T - 25K) * \gamma_{P_{MPP}(T)}\right) dt$$

mit

G = Solarstrahlungsleistung in W/m$^2$,
T = Temperatur des mindestens einen Anlagenteils in K,
$\gamma_{P_{MPP}(T)}$ = Temperaturkoeffizient mindestens eines Photovoltaikmoduls des mindestens einen Anlagenteils in 1/K bei Maximalleistung; und

- Ermittlung eines temperaturkompensierten Leistungsverhältnisses PR$_{Tagkomp}$ in % , wobei

$$PR_{Tagkomp} = \frac{\left(\dfrac{E_{Tag}}{P_{theo}}\right)}{\left(\dfrac{H_{Tagkomp}}{1000\dfrac{W}{m^2}}\right)} * 100\% \quad ,$$

mit

E$_{Tag}$ = Tagesenergie des mindestens einen Anlagenteils in kwh,
P$_{theo}$ = maximal mögliche Leistung in kW der Photovoltaikanlage bei Standardtestbedingungen; und

- Vergleich des ermittelten temperaturkompensierten Leistungsverhältnisses PR$_{Tagkomp}$ mit einem Leistungsverhältnis-Sollwert für den mindestens einen Anlagenteil

9. Vorrichtung nach Anspruch 7 oder Anspruch 8,
**dadurch gekennzeichnet, dass** weiterhin mindestens eine fünfte Einrichtung (5) zur Ausgabe mindestens eines Warnsignals bei Auftreten einer negativen Abweichung des ermittelten temperaturkompensierten Leistungsverhältnis PR$_{Tagkomp}$ vom Leistungsverhältnis-Sollwert vorhanden ist.

10. Vorrichtung nach einem der Ansprüche 7 bis 9,
**dadurch gekennzeichnet, dass** die mindestens eine erste Einrichtung (1) und die mindestens eine zweite Einrichtung (2) der Photovoltaikanlage (20) zugeordnet sind.

11. Vorrichtung nach einem der Ansprüche 7 bis 10,
**dadurch gekennzeichnet,**
**dass** jeweils eine dritte Einrichtung (3) zur Ermittlung von Werten zur Berechnung einer Tagesenergie E$_{Tag}$ einem Wechselrichter (25) der Photovoltaikanlage (20) zugeordnet ist.

12. Vorrichtung nach einem der Ansprüche 7 bis 11,
**dadurch gekennzeichnet, dass** die mindestens eine vierte Einrichtung (4) durch mindestens eine Recheneinheit bereitgestellt ist.

13. Vorrichtung nach einem der Ansprüche 7 bis 12,
**dadurch gekennzeichnet, dass** mittels der mindestens einen vierten Einrichtung (4) und/oder der mindestens einen fünften Einrichtung (5) eine Fernüberwachung der Photovoltaikanlage (20) durchführbar ist.

14. Vorrichtung nach einem der Ansprüche 7 bis 13,
**dadurch gekennzeichnet, dass** zur Überwachung einer Photovoltaikanlage mit einer Leistung im Bereich mehrerer Megawatt an zwei oder mehr Stellen der Photovoltaikanlage erste und/oder zweite Einrichtungen installiert sind.

15. Verwendung einer Vorrichtung (10) nach einem der Ansprüche 7 bis 14 unter Durchführung eines Verfahrens nach einem der Ansprüche 1 bis 6 als Selbstdiagnoseeinrichtung zur Erkennung mindestens eines Defekts in mindestens einem Anlagenteil einer Photovoltaikanlage (10) oder einer gesamten Photovoltaikanlage (10).

## Claims

1. Method for monitoring at least one unit part of a photovoltaic unit (20), comprising the following steps:

    - determining a temperature-compensated daily solar radiation energy $H_{daycomp}$ in Wh/m$^2$ of the at least one unit part, wherein

$$H_{daycomp} \; = \; \int_{Sunrise}^{Sunset} G * \left(1 - (T - 25K) * \gamma_{P_{MPP(T)}}\right) dt$$

    where

    G = solar radiation power in W/m$^2$,
    T = temperature of the at least one unit part in K,
    $\gamma_{P_{MPP(T)}}$ = temperature coefficient of at least one photovoltaic module of the at least one unit part in 1/K at maximal power,

    - determining a temperature-compensated power ratio $PR_{daycomp}$ in %, wherein

$$PR_{daycomp} \; = \; \frac{\left(\dfrac{E_{day}}{P_{theo}}\right)}{\left(\dfrac{H_{daycomp}}{1000\dfrac{W}{m^2}}\right)} * 100\% \quad ,$$

    where

    $E_{day}$ = daily energy of the at least one unit part in kWh,
    $P_{theo}$ = maximum possible power in kW of the photovoltaic unit with standard test conditions, and

    - comparing the determined temperature-compensated power ratio $PR_{daycomp}$ with a power ratio desired value for the at least one unit part, wherein a negative deviation of the determined temperature-compensated power ratio $PR_{daycomp}$ from the power ratio desired value for the at least one unit part indicates the need to monitor and if necessary repair a defect in the at least one unit part.

2. Method according to claim 1,
**characterized in that** the at least one unit part comprising at least one photovoltaic module (21, 22, 23, 24) having a large number of photovoltaic cells and/or comprising at least one inverter (25) is chosen.

3. Method according to claim 1 or 2,
**characterized in that** for determining the daily energy $E_{day}$ a contactless direct current measurement is carried out and an instantaneous current signal determined in the process is multiplied by a direct voltage instantaneously measured at the at least one unit part.

4. Method according to one of claims 1 to 3, **characterized in that** the determination of the temperature-compensated power ratio $PR_{daycomp}$ and the comparison between the determined temperature-compensated power ratio $PR_{daycomp}$ and the power ratio desired value is automatically carried out for the at least one unit part.

5. Method according to any one of claims 1 to 4, **characterized in that** the comparison between the determined temperature-compensated power ratio $PR_{daycomp}$ and the power ratio desired value for the at least one unit part is only carried out if a fixed minimal value is attained or exceeded for $H_{daycomp}$.

6. Method according to one of claims 1 to 5, **characterized in that** at least one warning signal is output in the case of a negative deviation of the determined temperature-compensated power ratio $PR_{daycomp}$ from the power ration desired value for the at least one unit part.

7. Device (10) for carrying out the method according to one of claims 1 to 6, comprising:

- at least one first apparatus (1) for determining a temperature T of the at least one unit part,
- at least one second apparatus (2) for determining a solar radiation power G in at least one unit part,
- at least one third apparatus (3) for determining values for calculating a daily energy $E_{day}$ of the at least one unit part, and
- at least one fourth apparatus (4) for calculating the daily energy $E_{day}$ of the at least one unit part and/or for calculating a temperature-compensated daily solar radiation energy $H_{daycomp}$ of the at least one unit part and/or for calculating a temperature-compensated power ratio $PR_{daycomp}$ of the at least one unit part and/or furthermore for comparing the temperature-compensated power ratio $PR_{daycomp}$ with a power ratio desired value for the at least one unit part.

8. Device according to claim 7,
**characterized in that** the at least one fourth apparatus (4) is set up to carry out the following calculations:

- determining the temperature-compensated daily solar radiation energy $H_{daycomp}$ in Wh/m$^2$, wherein

$$\mathrm{H_{daycomp}} \;=\; \int_{Sunrise}^{Sunset} G * \left(1 - (T - 25K) * \gamma_{P_{MPP}(T)}\right) dt$$

where

G = solar radiation power in W/m$^2$,
T = temperature of the at least one unit part in K,
$\gamma_{P_{MPP}(T)}$ = temperature coefficient in 1/K of at least one photovoltaic module of the at least one unit part at maximal power, and

- determining a temperature-compensated power ratio $PR_{daycomp}$ in %, wherein

$$PR_{daycomp} = \frac{\left(\dfrac{E_{day}}{P_{theo}}\right)}{\left(\dfrac{H_{daycomp}}{1000\dfrac{W}{m^2}}\right)} * 100\% \quad ,$$

where

$E_{day}$ = daily energy of the at least one unit part in kWh,

$P_{theo}$ = maximum possible power in kW of the photovoltaic unit with standard test conditions, and

- comparing the determined temperature-compensated power ratio $PR_{daycomp}$ with a power ratio desired value for the at least one unit part.

9. Device according to claim 7 or claim 8, **characterized in that** furthermore there is at least one fifth apparatus (5) for outputting at least one warning signal in the case of a negative deviation of the determined temperature-compensated power ratio $PR_{daycomp}$ from the power ratio desired value.

10. Device according to one of claims 7 to 9, **characterized in that** the at least one first apparatus (1) and the at least one second apparatus (2) are associated with the photovoltaic unit (20).

11. Device according to one of claims 7 to 10, **characterized in that** a third apparatus (3) respectively for determining values for calculating a daily energy $E_{day}$ are associated with an inverter (25) of the photovoltaic unit (20).

12. Device according to one of claims 7 to 11, **characterized in that** the at least one fourth apparatus (4) is provided by at least one arithmetic unit.

13. Device according to one of claims 7 to 12, **characterized in that** remote monitoring of the photovoltaic unit (20) can be carried out by means of the at least one fourth device (4) and/or the at least one fifth apparatus (5).

14. Device according to any one of claims 7 to 13, **characterized in that** first and/or second apparatus(es) are installed at two or more points of the photovoltaic unit for monitoring a photovoltaic unit with a power in the region of several megawatts.

15. Use of a device (10) according to one of claims 7 to 14 while carrying out a method according to any one of claims 1 to 6 as a self-diagnosis system for detecting at least one defect in at least one unit part of a photovoltaic unit (10) or an entire photovoltaic unit (10).

**Revendications**

1. Procédé de contrôle d'au moins une partie d'une installation ( 20 ) photovoltaïque, comprenant les stades suivantes :

- on détermine une énergie HTagkomp de rayonnement solaire-journalière compensée en température en Wh/m² de la au moins une partie de l'installation en ayant

$$H_{Tagkomp} = \int_{lever\ du\ soleil}^{coucher\ du\ soleil} G * \left(1 - (T - 25K) * \gamma_{P_{MPP}(T)}\right) dt$$

avec

G = puissance du rayonnement solaire en W/m², 
T = température de la au moins une partie de l'installation en K, 
$\gamma$PMPP( T )= coefficient de température d'au moins un module photovoltaïque de la au moins une partie de l'installation en 1/K à la puissance maximum,

- on détermine un rapport PRTagkomp de puissance compensé en température en % en ayant

$$PR_{Tagkomp} = \frac{\left(\dfrac{E_{Tag}}{P_{theo}}\right)}{\left(\dfrac{H_{Tagkomp}}{1000\,\dfrac{W}{m^2}}\right)} * 100\%$$

avec

ETag = énergie journalière de la au moins une partie de l'installation en kWh, 
Ptheo = puissance maximum possible en kW de l'installation de photovoltaïque dans des conditions de test normalisées ; et

- on compare le rapport PRTagkomp de puissance compensé en température, qui a été déterminé, à une valeur de consigne du rapport de puissance pour la au moins une partie de l'installation, un écart négatif du rapport PRTagkomp de puissance compensé en température, qui a été déterminé, à la valeur de consigne du rapport de puissance pour la au moins une partie de l'installation indiquant la nécessité d'un contrôle et, le cas échéant, d'une réparation d'un défaut de la au moins une partie de l'installation.

2. Procédé suivant la revendication 1, 
**caractérisé en ce que** l'on choisit la au moins une partie de l'installation comprenant au moins un module ( 21, 22, 23, 24 ) photovoltaïque ayant une pluralité de piles photovoltaïques et/ou comprenant au moins un onduleur ( 25 ).

3. Procédé suivant la revendication 1 ou la revendication 2, 
**caractérisé en ce que**, pour la détermination de l'énergie ETag journalière, on effectue une mesure du courant continu sans contact et on multiplie un signal de courant présent, qui a été déterminé, par une tension continu mesurée présentement sur la au moins une partie de l'installation.

4. Procédé suivant l'une des revendications 1 à 3, 
**caractérisé en ce que** l'on effectue automatiquement la détermination du rapport $PR_{Tagkomp}$ de puissance compensé en température et la comparaison entre le rapport $PR_{Tagkomp}$ de puissance compensé en température, qui a été déterminé, et la valeur de consigne du rapport de puissance pour la au moins une partie de l'installation.

5. Procédé suivant l'une des revendications 1 à 4, 
**caractérisé en ce que** l'on effectue la comparaison entre le rapport $PR_{Tagkomp}$ de puissance compensé en température, qui a été déterminé, à la valeur de consigne du rapport de puissance pour la au moins une partie de l'installation seulement si une valeur minimum fixée de $H_{Tagkomp}$ est atteinte ou est dépassée.

6. Procédé suivant l'une des revendications 1 à 5, 
**caractérisé en ce que** s'il y a un écart négatif du rapport $PR_{Tagkomp}$ de puissance compensé en température, qui a été déterminé, à la valeur de consigne du rapport de puissance pour la au moins une partie de l'installation, on émet au moins un signal d'alerte.

7. Système ( 10 ) pour effectuer le procédé suivant l'une des revendications 1 à 6, comprenant

- au moins un premier dispositif ( 1 ) de détermination d'une température T de la au moins une partie de l'installation,
- au moins un deuxième dispositif ( 2 ) de détermination d'une puissance G du rayonnement solaire dans au moins une partie de l'installation,
- au moins un troisième dispositif ( 3 ) de détermination de valeurs pour le calcul d'une énergie $E_{Tag}$ journalière de la au moins une partie de l'installation ; et
- au moins un quatrième dispositif ( 4 ) de calcul de l'énergie $E_{Tag}$ journalière de la au moins partie de l'installation et/ou de calcul d'une énergie $H_{Tagkomp}$ du rayonnement solaire journalière compensée en température de la au moins une partie de l'installation et/ou de calcul d'un rapport $PR_{Tagkomp}$ de puissance compensé en température de la au moins une partie de l'installation et/ou en outre de comparaison du rapport $PR_{Tagkomp}$ de puissance compensé en température à une valeur de consigne du rapport de puissance pour la au moins une partie de l'installation.

8. Système suivant la revendication 7,
   **caractérisé en ce que** le au moins un quatrième dispositif ( 4 ) est conçu pour effectuer les calculs suivantes :

- détermination de l'énergie $H_{Tagkomp}$ de rayonnement solaire-journalière compensée en température en Wh/m$^2$ de la au moins une partie de l'installation en ayant

$$H_{Tagkomp} \;=\; \int_{lever\ du\ soleil}^{coucher\ du\ soleil} G * \left(1 - (T - 25K) * \gamma_{P_{MPP}(T)}\right) dt$$

avec

G = puissance du rayonnement solaire en W/m$^2$,
T = température de la au moins une partie de l'installation en K,
$\gamma_{PMPP(T)}$ = coefficient de température d'au moins un module photovoltaïque de la au moins une partie de l'installation en 1/K à la puissance maximum ;

- on détermine un rapport $PR_{Tagkomp}$ de puissance compensé en température en % en ayant

$$PR_{Tagkomp} \;=\; \frac{\left(\dfrac{E_{Tag}}{P_{theo}}\right)}{\left(\dfrac{H_{Tagkomp}}{1000\,\dfrac{W}{m^2}}\right)} * 100\%$$

$E_{Tag}$ = énergie journalière de la au moins une partie de l'installation en kWh,
$P_{theo}$ = puissance maximum possible en kW de l'installation de photovoltaïque dans des conditions de test normalisées ; et

- on compare le rapport $PR_{Tagkomp}$ de puissance compensé en température, qui a été déterminé, à une valeur de consigne du rapport de puissance pour la au moins une partie de l'installation.

9. Système suivant la revendication 7 ou revendication 8,
   **caractérisé en ce qu'**il est prévu en outre au moins un cinquième dispositif ( 5 ) d'émission d'au moins un signal d'alerte lorsqu'il se produit un écart négatif du rapport $PR_{Tagkomp}$ de puissance compensé en température, qui a été déterminé, à la valeur de consigne du rapport de puissance.

10. Système suivant l'une des revendications 7 à 9,
    **caractérisé en ce que** le au moins un premier dispositif ( 1 ) et le au moins un deuxième dispositif ( 2 ) sont associés à l'installation ( 20 ) photovoltaïque.

11. Système suivant l'une des revendications 7 à 10,
    **caractérisé en ce que** respectivement un troisième dispositif ( 3 ) de valeur de calcul d'une énergie $E_{Tag}$ solaire est associé respectivement à un onduleur ( 25 ) de l'installation ( 20 ) photovoltaïque.

12. Système suivant l'une des revendications 7 à 11,
    **caractérisé en ce que** le au moins un quatrième dispositif ( 4 ) est mis à disposition par au moins une unité informatique.

13. Système suivant l'une des revendications 7 à 12,
    **caractérisé en ce qu'**un télécontrôle de l'installation ( 20 ) photovoltaïque peut être effectué au moyen d'un quatrième dispositif ( 4 ) et/ou du au moins un cinquième dispositif ( 5 ).

14. Système suivant l'une des revendications 7 à 13,
    **caractérisé en ce que** l'on installe, pour le contrôle d'une installation ( 20 ) photovoltaïque ayant une puissance de l'ordre de plusieurs mégawatt, des premier et/ou deuxième dispositifs en deux ou plusieurs points de l'installation photovoltaïque.

15. Utilisation d'un système ( 10 ) suivant l'une des revendications 7 à 14 pour effectuer un procédé suivant l'une des revendications 1 à 6 en tant que dispositif d'auto diagnostic de détection d'au moins un défaut dans au moins une partie d'une installation ( 10 ) photovoltaïque ou d'une installation ( 10 ) photovoltaïque complète.

## FIG 1

EP 2 399 177 B1

FIG 2

EP 2 399 177 B1

**IN DER BESCHREIBUNG AUFGEFÜHRTE DOKUMENTE**

**In der Beschreibung aufgeführte Patentdokumente**

- US 20080106250 A

**In der Beschreibung aufgeführte Nicht-Patentliteratur**

- Überwachung/Monitoring von Photovoltaikanlagen. **M. D'SOUZA ; L. HERZOG.** Bulletin SEV/VSE. 27-28

- **H. HÄBERLEIN ; C. BEUTLER.** Analyse des Betriebsverhaltens von Photovoltaikanlagen durch normierte Darstellung von Energieeintrag und Leistung. *Bulletin SEV/VSE,* April 1995, 25-33